# EUROPÄISCHE PATENTSCHRIFT

(11) **EP 0 943 071 B1**
(45) Veröffentlichungstag und Bekanntmachung des Hinweises auf die Patenterteilung: **06.06.2001**
(21) Anmeldenummer: 97953769.3
(22) Anmeldetag: 09.12.1997
(51) Int. Cl.: F24F 5/00, F24F 7/04, F24J 2/04, E06B 7/04

(54) **GEBÄUDEFASSADE**
BUILDING FACADE
FA ADE DE BATIMENT

(30) Priorität: 09.12.1996 DE 19651104
(43) Veröffentlichungstag der Anmeldung: 22.09.1999
(73) Patentinhaber: Schumacher, Michael, 60327 Frankfurt (DE)
(72) Erfinder: Schumacher, Michael, 60327 Frankfurt (DE)
(74) Vertreter: Betten & Resch
(86) Internationale Anmeldenummer: EP9706878
(87) Internationale Veröffentlichungsnummer: WO9826224

(56) Entgegenhaltungen:
- CH-A- 683 787
- US-A- 5 184 440

## Beschreibung

Die Erfindung betrifft eine Gebäudefassade, die eine Innenfassade und eine Außenfassade aufweist. Derartige bekannte doppelte Fassadensysteme eignen sich besonders als Fassaden für Bürogebäude, insbesondere Hochhäuser. In den vergangenen Jahren sind die mit der Verwendung von Klimaanlagen bei Bürogebäuden verbundenen Nachteile, wie eine hohe Staub- und/oder Keimbelastung in der Luft, Zugluft u. dgl. und die damit verbundenen Gesundheitsprobleme verstärkt in das Bewüßtsein gerückt. Darüber hinaus haben Klimaanlagen aufgrund der Kälieerzeugung und der Luftumwälzung einen vergleichsweise hohen Energiebedarf.

Es wurden daher Versuche unternommen, eine Klimatisierung und Belüftung von Bürogebäuden auf natürliche Weise zu verwirklichen. Dazu eignen sich insbesondere die eingangs erwähnten doppelten Fassadensysteme. Eine bekannte Anordnung besteht beispielsweise aus einer äußeren, der eigentlichen Fassade vorgesetzten Prallscheibe, die hohe Winddruck- und -sogkräfte von der dahinterliegenden Fassade fernhält, die herkömmliche Fenster zur Belüftung aufweisen kann. Derartige Fassaden sind jedoch aus architektonischen Gesichtspunkten unbefriedigend, da die vorgesetzte Prallscheibe einen "aufgeklebten" optischen Eindruck macht. Außerdem erlauben die hinter der Außenfassade angeordneten Kippfenster nur eine begrenzte Luftzirkulation, was insbesondere bei Südfassaden im Sommer nachteilig sein kann.

Aus dem schweizerischen Patent CH 683787 A5 ist eine Gebäudefassade mit einer Innenfassade und einer Außenfassade bekannt, wobei an der Außenfassade um eine horizontale Achse drehbare Klappelemente angebracht sind, die zwischen einer Sommerposition, die eine Entlüftung eines zwischen Außen- und Innenfassade verlaufenden Warmluftstromes ermöglicht, und einer Winterposition verschwenkbar sind, in der der Luftstrom zum Aufheizen des Fensters verwendet wird.

Es ist daher eine Aufgabe der vorliegenden Erfindung, eine aus Innenfassade und Außenfassade bestehende Gebäudefassade so weiterzuentwickeln, daß die beim Stand der Technik bestehenden Nachteile vermieden werden und insbesondere eine ausreichende natürliche Belüftung und ein ästhetischer Gesamteindruck des Gebäudes ermöglicht werden kann.

Gelöst wird die Aufgabe durch eine Gebäudefassade nach Anspruch 1, wobei die Außenfassade durch freitragende, ohne äußeren Rahmen gehaltene Glaselemente gebildet wird, die um eine vertikale Drehachse drehbar sind.

Der Vorteil der erfindungsgemäßen Gebäudefassade liegt darin, daß die Fassadenelemente mit vergleichsweise geringem Kraftaufwand aus einer Schließposition in eine Öffnungsposition bewegt werden können, welche Öffnungsposition eine ausreichende Luftzirkulation zuläßt. Die freitragende Halterung der Glaselemente ergibt eine elgante glatte Fassadenansicht und ermöglicht eine platz- und gewichtssparende Betätigung der Elemente.

Die Fassadenelemente können gemäß Anspruch 2 beidseitig um eine mittlere Drehachse oder gemäß Anspruch 4 um eine seitliche Drehachse drehbar sein. Die beidseitige Drehbarkeit ermöglicht eine besonders gute Anpassung an sich ändernde Windrichtungen.

Gemäß einer vorteilhaften Weiterbildung weist die Gebäudefassade gemäß Anspruch 5 geschoßhohe Glaselemente auf, welche, wie in Anspruch 6 beschrieben, an aufeinanderstoßenden Kanten Isolierelemente aufweisen können.

Gemäß einer bevorzugten Weiterbildung nach Anspruch 7 sind mehrere Fassadenelemente miteinander gekoppelt und können mittels einer gemeinsamen Antriebseinrichtung betätigt werden. Vorzugsweise werden die in einer horizontalen Gebäudeebene befindlichen Fassadenelemente mittels eines horizontalen Seilzuges betätigt, welcher Seilzug auf einen mit dem Fassadenelement verbundenen Betätigungshebel wirkt. Vorzugsweise können die miteinander gekoppelten Fassadenelemente mittels einer Steuereinrichtung in Abhängigkeit von den Witterungsbedingungen betätigt werden. Dies ermöglicht eine optimale Anpassung der Positionen der Fassadenelemente an die jeweils herrschenden Witterungsbedingungen. Zur Erfassung selbiger können gemäß Anspruch 11 Sensoren für Temperatur, Sonneneinstrahlung und/oder Windgeschwindigkeit vorgesehen sein.

Im Folgenden werden bevorzugte Ausführungsbeispiele der erfindungsgemäßen Gebäudefassade anhand der beiliegenden Zeichnungen beschrieben, in denen:
- Fig. 1: einen Horizontalschnitt eines Abschnitts einer Gebäudefassade gemäß einem ersten Ausführungsbeispiel der Erfindung zeigt;
- Fig. 2: einen Horizontalschnitt durch einen Abschnitt einer Gebäudefassade gemäß einem zweiten Ausführungsbeispiel der Erfindung zeigt;
- Fig. 3: eine perspektivische Ansicht einer Gebäudefassade gemäß dem Ausführungsbeispiel von Fig. 1 zeigt; und
- Fig. 4: eine weitere schematische Perspektivdarstellung der in den Fig. 1 und 3 dargestellten Gebäudefassade zeigt.

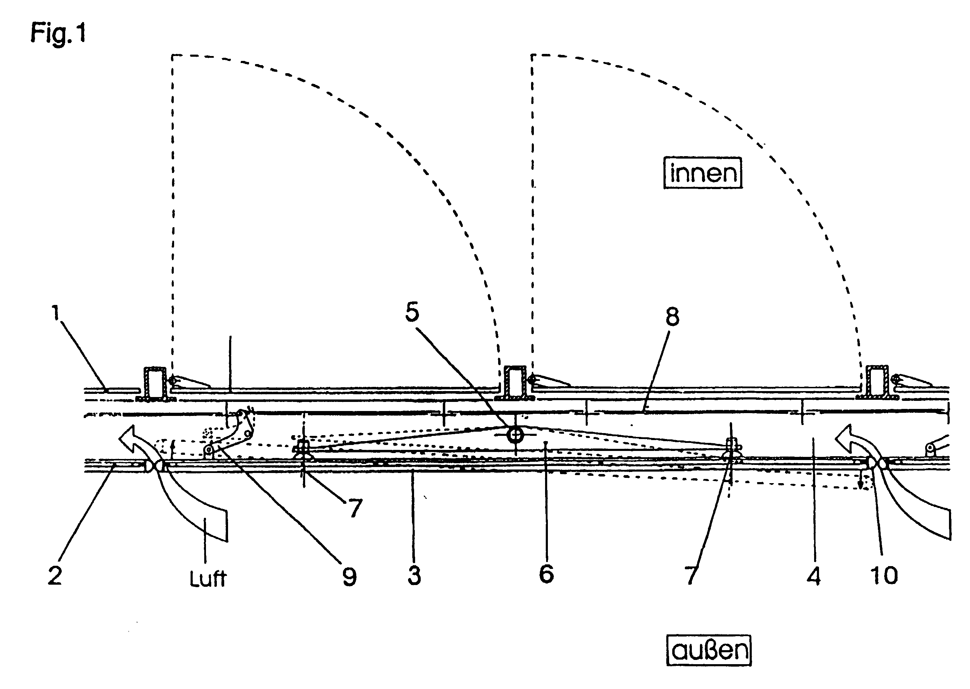

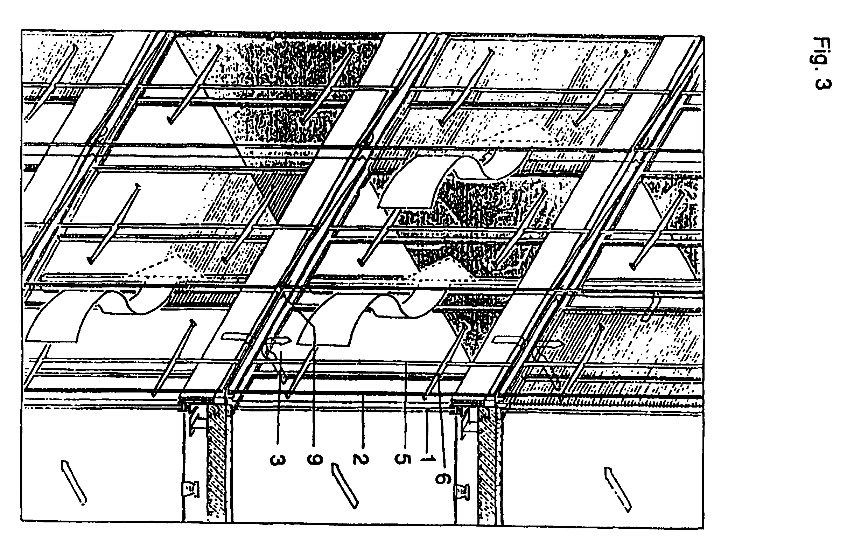

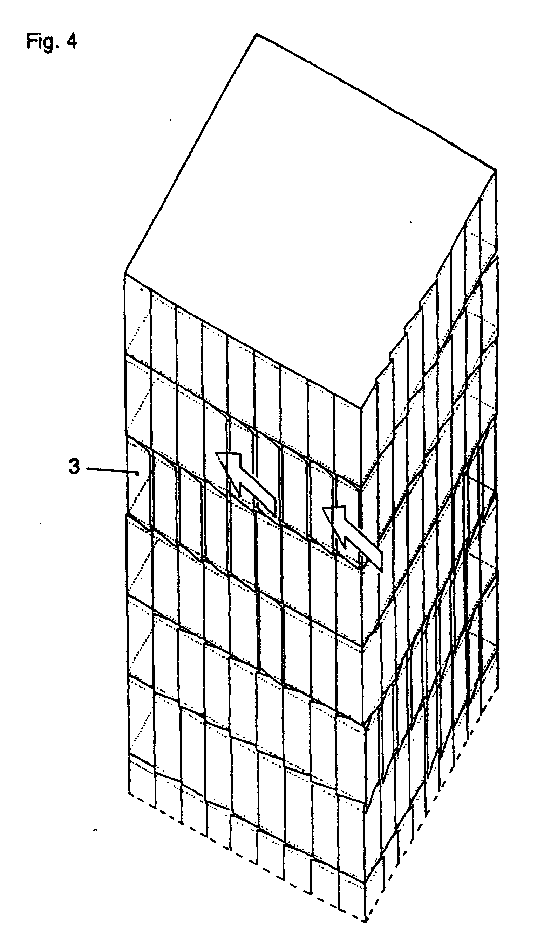

Fig. 1 zeigt im Querschnitt (oder Horizontalschnitt) einen Abschnitt einer Gebäudefassade gemäß einem ersten Ausführungsbeispiel der Erfindung. Die Gebäudefassade weist eine an sich bekannte Innenfassade 1 und eine durch einen Zwischenraum 4 getrennte Außenfassade 2 auf. Die Außenfassade 2 besteht aus mehreren um eine Vertikalachse drehbaren Fassadenelementen 3, die vorzugsweise als geschoßhohe Glaselemente ausgebildet sind. Wie in den Fig. 3 und 4 dargestellt, setzt sich gemäß einem bevorzugten Ausführungsbeispiel die gesamte Fassade eines Gebäudes aus den geschoßhohen Glas-Fassadenelementen 3 zusammen, was einen architektonisch interessanten Gesamteindruck ergibt. Benachbarte Fassadenelemente 3 weisen an deren aufeinanderstoßenden Kanten Isolierelemente 10 zur Isolierung auf. Bei dem in Fig. 1 gezeigten Ausführungsbeispiel ist die vertikale Drehachse 5 in der Mitte eines Geschoßelementes 3 in dem Zwischenraum 4 zwischen Innen- und Außenfassade angeordnet. Es ist jedoch auch denkbar, die Drehachse außerhalb der Außenfassade 2 anzuordnen. Die Drehachse 5 kann sich, wie in Fig. 3 gezeigt, über mehrere Etagen des Gebäudes erstrecken. Sie ist fest mit Trägerelementen 6 verbunden, von denen je Fassadenelement wenigstens zwei, möglicherweise auch drei oder mehr vorgesehen sind und die sich vorzugsweise in horizontaler Richtung erstrecken. Die Träger 6 halten die Glaselemente 3 ohne äußeren Rahmen und sind beispielsweise mittels jeweils zwei Punktbefestigungen 7 an dem zugehörigen Fassadenelement 3 befestigt.

Mittels eines Seilzuges 8 lassen sich mehrere Fassadenelemente in einem Gebäudegeschoß gleichzeitig ansteuern. Dazu greift der Seilzug 8 an einem Betätigungshebel 9 an, der gelenkig mit der Glasscheibe 3 verbunden ist. Es ist jedoch auch möglich, den Betätigungshebel 9 mit dem Träger 6 zu verbinden. Durch Betätigung des Seilzuges 8 ist ein Öffnen und Schließen des Glaselementes 3 möglich. Eine Drehrichtung ist in Fig. 1 mittels gestrichelter Linien angedeutet. Geöffnete Fassadenelemente 3 ermöglichen, wie durch die Pfeile symbolisch angedeutet, eine Luftzirkulation von der Umgebung in den Zwischenraum zwischen Innenfassade 1 und Außenfassade 2. Die Innenfassade 1 kann, wie in Fig. 1 gezeigt, aus gewöhnlichen Türen mit Klappfenstern od. dgl. bestehen, so daß die Luftzirkulation auch von den in dem Gebäude tätigen Menschen beeinflußt werden kann. Desweiteren ist es möglich, entweder die Außenfassade oder die Innenfassade mit Jalousien zur Regulierung der Sonneneinstrahlung zu versehen.

Besonders vorteilhaft ist es, mehrere gekoppelte Fassadenelemente 3 mittels einer (nicht dargestellten) witterungsabhängigen Steuerung, beispielsweise mit Computerunterstützung, in Abhängigkeit von den Witterungsbedingungen zu steuern. Dazu können an geeigneten Stellen am Gebäude (ebenfalls nicht dargestellte) Sensoren zur Erfassung der Temperatur, der Sonneneinstrahlung oder der Windgeschwindigkeit vorgesehen sein. So kann beispielsweise die Steuerung bei einer Zunahme der Temperatur und/oder Sonneneinstrahlung alle Fassadenelemente 3 einer Gebäudefassade gleichzeitig ansteuern und bewegen, was auch einen interessanten ästhetischen Eindruck vermittelt. Diese Möglichkeit ist in Fig. 4 schematisch dargestellt.

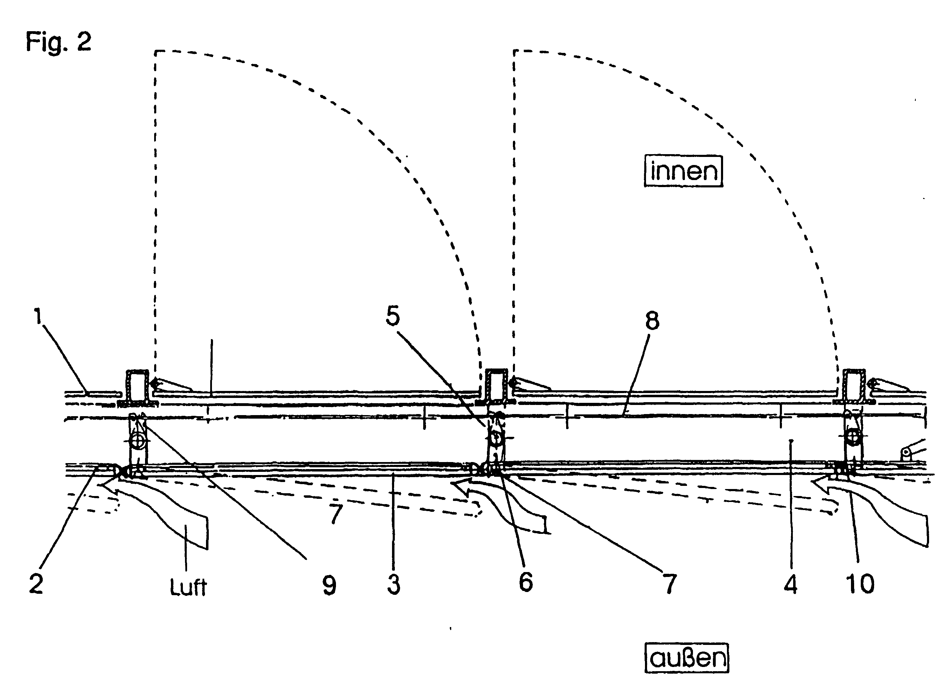

Fig. 2 zeigt ein zweites Ausführungsbeispiel der erfindungsgemäßen Gebäudefassade im Horizontalschnitt. Diese entspricht dem in Fig. 1 gezeigten ersten Ausführungsbeispiel mit dem Unterschied, daß die vertikale Drehachse 5 nicht in der Mitte, sondern an der Seite jedes Fassadenelementes 3 angeordnet ist. An der gleichen Seite des Fassadenelementes 3 ist auch der Betätigungshebel 9 zum Öffnen und Schließen angeordnet. Gegenüber dem in Fig. 1 gezeigten Ausführungsbeispiel kann das Glaselement 3 nach außen geöffnet werden.
Jedoch ist die Konstruktion einfacher und damit preiswerter auszuführen. Die erfindungsgemäße Gebäudefassade ermöglicht somit eine individuell oder mittels einer gemeinsamen Steuereinrichtung gekoppelte natürliche Belüftung eines Gebäudes durch um eine vertikale Achse schwenkbare Glaselemente, die ohne äußeren Rahmen gehalten sind.

## Patentansprüche

1. Gebäudefassade, aufweisend eine Innenfassade (1) und eine Außenfassade (2), dadurch gekennzeichnet, daß die Außenfassade (2) freitragende, ohne äußeren Rahmen gehaltene Glaselemente (3) aufweist, die um eine vertikale Achse (5) drehbar sind.

2. Gebäudefassade nach Anspruch 1, **dadurch gekennzeichnet,** daß die Glaselemente (3) um eine mittlere Drehachse (5) in zwei Richtungen drehbar sind.

3. Gebäudefassade nach Anspruch 2, **dadurch gekennzeichnet,** daß jedes Glaselement (3) mittels einer Haltevorrichtung (6, 7) mit der Drehachse (5) verbunden ist, welche Haltevorrichtung (6, 7) wenigstens zwei fest mit der Drehachse (5) verbundene horizontale Träger (6) aufweist, die mittels jeweils wenigstens zwei Punktbefestigungen (7) an dem Glaselement (3) befestigt sind.

4. Gebäudefassade nach Anspruch 1, **dadurch gekennzeichnet,** daß die Glaselemente (3) um eine seitliche Drehachse (5) drehbar und nach außen öffenbar sind.

5. Gebäudefassade nach einem der Ansprüche 1 bis 4, **dadurch gekennzeichnet,** daß die Glaselemente (3) geschoßhoch, vorzugsweise aus Isolierglas, ausgebildet sind.

6. Gebäudefassade nach einem der Ansprüche 1 bis 5, **dadurch gekennzeichnet,** daß benachbarte Glaselemente (3) an den aufeinanderstoßenden seitlichen Kanten Isolierelemente (10) aufweisen.

7. Gebäudefassade nach Anspruch 1 bis 6, **dadurch gekennzeichnet,** daß mehrere Glaselemente (3) miteinander gekoppelt und mittels einer gemeinsamen Antriebseinrichtung betätigbar sind.

8. Gebäudefassade nach Anspruch 7, **dadurch gekennzeichnet,** daß die Antriebseinrichtung einen horizontalen Seilzug (8) aufweist, welcher einen mit dem Glaselement (3) verbundenen Betätigungshebel (9) antreibt.

9. Gebäudefassade nach Anspruch 8, soweit auf Anspruch 3 rückbezogen, **dadurch gekennzeichnet,** daß der Betätigungshebel (9) an dem horizontalen Träger (6) befestigt ist.

10. Gebäudefassade nach einem der Ansprüche 7 bis 9, **dadurch gekennzeichnet,** daß die Glaselemente (3) mittels einer Steuereinrichtung in Abhängigkeit von den Witterungsbedingungen betätigbar sind.

11. Gebäudefassade nach Anspruch 10, **dadurch gekennzeichnet,** daß Sensoren zur Erfassung von Temperatur, Sonneneinstrahlung und/oder Windgeschwindigkeit vorgesehen sind.

## Claims

1. Building façade, comprising an inner façade (1) and an outer facade (2), **characterised in that** the outer facade (2) comprises self-supporting glass elements (3) which are retained without an outer frame and which are capable of rotating about a vertical axis (5).

2. Building facade according to Claim 1, **characterised in that** the glass elements (3) are capable of rotating in two directions about a central axis of rotation (5).

3. Building facade according to Claim 2, **characterised in that** each glass element (3) is connected to the axis of rotation (5) by means of a retaining device (6, 7) which comprises at least two horizontal supports (6) which are firmly connected to the axis of rotation (5) and fastened to the glass element (3) by means of, in each instance, at least two point fastenings (7).

4. Building facade according to Claim 1, **characterised in that** the glass elements (3) are capable of rotating about a lateral axis of rotation (5) and are capable of being opened outwards.

5. Building facade according to one of Claims 1 to 4, **characterised in that** the glass elements (3) are formed in storey-high manner, preferably from insulating glass.

6. Building facade according to one of Claims 1 to 5, **characterised in that** adjacent glass elements (3) comprise insulating elements (10) on the lateral abutting edges.

7. Building facade according to Claims 1 to 6, **characterised in that** several glass elements (3) are coupled to one another and are capable of being actuated by means of a common drive device.

8. Building facade according to Claim 7, **characterised in that** the drive device comprises a horizontal cable pull (8) which drives an actuating lever (9) connected to the glass element (3).

9. Building facade according to Claim 8 to the extent that it is subordinate to Claim 3, **characterised in that** the actuating lever (9) is fastened to the horizontal support (6).

10. Building facade according to one of Claims 7 to 9, **characterised in that** the glass elements (3) are capable of being actuated in a manner dependent on the weather conditions by means of a control device.

11. Building facade according to Claim 10, **characterised in that** sensors are provided for registering temperature, insolation and/or wind speed.

## Revendications

1. Façade de bâtiment comprenant une façade intérieure (1) et une façade extérieure (2), caractérisée en ce que la façade extérieure (2) comprend des éléments vitrés (3) en saillie, maintenus sans cadre extérieur, lesquels peuvent pivoter autour d'un axe vertical (5).

2. Façade de bâtiment selon la revendication 1, caractérisée en ce que les éléments vitrés (3) peuvent pivoter dans deux directions autour d'un axe de rotation (5) central.

3. Façade de bâtiment selon la revendication 2, caractérisée en ce que chaque élément vitré (3) est relié à l'axe de rotation (5) au moyen d'un dispositif de retenue (6, 7), lequel dispositif de retenue (6, 7) comporte au moins deux supports (6) horizontaux assemblés de manière fixe avec l'axe de rotation (5), lesquels sont fixés contre l'élément vitré (3) au moyen d'au moins deux fixations ponctuelles (7).

4. Façade de bâtiment selon la revendication 1, caractérisée en ce que les éléments vitrés (3) peuvent pivoter autour d'un axe de rotation (5) latéral et peuvent s'ouvrir vers l'extérieur.

5. Façade de bâtiment selon l'une quelconque des revendications 1 à 4, caractérisée en ce que les éléments vitrés (3) sont conçus de préférence en verre isolant de la hauteur d'un étage.

6. Façade de bâtiment selon l'une quelconque des revendications 1 à 5, caractérisée en ce que des éléments vitrés (3) contigus comportent des éléments d'isolation (10) posés sur les arêtes latérales juxtaposées.

7. Façade de bâtiment selon l'une quelconque des revendications 1 à 6, caractérisée en ce que plusieurs éléments vitrés (3) sont assemblés les uns aux autres et peuvent être manoeuvrés au moyen d'un dispositif d'entraînement commun.

8. Façade de bâtiment selon la revendication 7, caractérisée en ce que le dispositif d'entraînement comporte un entraînement par câble horizontal (8), qui entraîne un levier de manoeuvre (9) relié à l'élément vitré (3).

9. Façade de bâtiment selon la revendication 8, dans la mesure où elle se réfère à la revendication 3, caractérisée en ce que le levier de manoeuvre (9) est fixé contre le support (6) horizontal.

10. Façade de bâtiment selon l'une quelconque des revendications 1 à 9, caractérisée en ce que les éléments vitrés (3) peuvent être manoeuvrés par un dispositif de commande en fonction des conditions météorologiques.

11. Façade de bâtiment selon la revendication 10, caractérisée en ce qu'il est prévu des capteurs destinés à mesurer la température, l'ensoleillement et/ou la vitesse du vent.
